# EUROPEAN PATENT APPLICATION

(11) **EP 4 199 229 A1**
(43) Date of publication of application: **21.06.2023**
(21) Application number: 22763548.9
(22) Date of filing: 25.02.2022
(51) Int. Cl.: H01M 50/383, H01M 50/24, H01M 50/211, H01M 50/251

(54) **BATTERY MODULE HAVING IMPROVED FIRE PREVENTION PERFORMANCE**

(30) Priority: 04.03.2021 KR 20210029057
(71) Applicant: LG Energy Solution, Ltd., Seoul 07335 (KR)
(72) Inventor: HONG, Sung-Goen, Daejeon 34122 (KR); KONG, Yu-Dam, Daejeon 34122 (KR); KIM, Seung-Hyun, Daejeon 34122 (KR); SHIN, Jin-Kyu, Daejeon 34122 (KR); OH, Young-Hoo, Daejeon 34122 (KR); OK, Seung-Min, Daejeon 34122 (KR); JO, Sang-Hyun, Daejeon 34122 (KR)
(74) Representative: Hoffmann Eitle
(86) International application number: PCT/KR2022/002832
(87) International publication number: WO 2022/186565

(57) **Abstract**

Disclosed is a battery module capable of effectively preventing the occurrence or spread of fire. The battery module includes a cell assembly including a plurality of secondary batteries stacked on each other; and a module case including a lower plate, a side plate and an upper plate to form an inner space so that the cell assembly is accommodated therein, the module case including a trap unit formed in at least a part of an inner surface of the side plate to be concave outward, the trap unit being formed to be biased in a front or rear direction.

## Description

### TECHNICAL FIELD

The present application claims priority to Korean Patent Application No. 10-2021-0029057 filed on March 4, 2021 in the Republic of Korea, the disclosures of which are incorporated herein by reference.

The present disclosure relates to a battery, and more particularly, to a battery module capable of effectively preventing the occurrence or spread of fire, and a battery pack and an energy storage system including the same.

### BACKGROUND ART

In recent years, as the demand for portable electronic products such as laptops, video cameras and mobile phones has rapidly increased and robots, electric vehicles and the like are being commercialized in earnest, research on high-performance secondary batteries allowing repeatedly charging and discharging has been actively researched.

Currently commercialized secondary batteries include nickel cadmium battery, nickel hydrogen battery, nickel zinc battery, lithium secondary battery, and so on. In particular, the lithium secondary battery has almost no memory effect to ensure free charge and discharge, compared to the nickel-based secondary battery, and the lithium secondary battery is spotlighted due to a very low discharge rate and a high energy density.

The secondary battery may be used alone, but in general, a plurality of secondary batteries are electrically connected to each other in series and/or in parallel in many cases. In particular, the plurality of secondary batteries may be electrically connected to each other and accommodated in one module case, thereby configuring one battery module. In addition, the battery module may be used alone, or two or more battery modules may be electrically connected to each other in series and/or in parallel to configure a higher-level device such as a battery pack.

Recently, as issues such as power shortage or eco-friendly energy have been highlighted, an energy storage system (ESS) for storing the generated power is receiving more attention. Representatively, if such an energy storage system is used, it is easy to construct a system such as a smart grid system, so that it is possible to easily control power supply and demand in a specific area or city.

The battery pack used in an energy storage system may require a very large capacity, compared to a small-sized or medium-sized battery pack. Accordingly, the battery pack may typically include a large number of battery modules. In addition, in order to increase the energy density, the plurality of battery modules are often configured to be densely packed in a very narrow space.

However, if the plurality of battery modules are concentrated in a narrow space as described above, they may be vulnerable to fire. For example, a thermal propagation situation may occur in one battery module, so that high-temperature gas is discharged from at least one battery cell (secondary battery). Moreover, high-temperature sparks may be ejected when the gas is discharged, and the sparks may include active materials or molten aluminum particles that are separated from the electrodes inside the battery cell. Moreover, in some cases, flare or the like may be generated in some battery cells. If such spark or flare is leaked to the outside of the battery module, it may generate a fire in the battery pack.

In particular, since a lot of oxygen may exist at the outside of the battery module, if spark or the like is discharged to the outside of the battery module, the spark may meet oxygen to cause a fire. If a fire occurs in a specific battery module or the like, it may spread to other neighboring battery modules, or battery packs. In particular, since many batteries are concentrated in a narrow space of the energy storage system, if a fire occurs, it is not easy to suppress the fire. Moreover, considering the size and role of the energy storage system, there is a risk that the fire occurring inside the battery pack may cause very serious damage to property and human life. Therefore, even if a thermal propagation situation occurs in a specific battery cell or module to generate spark, flare, or the like, it is important to suppress the spark, flare, or the like in an early stage and prevent the spark, flare, or the like from progressing to a fire of a battery module or a battery pack.

### DISCLOSURE

### Technical Problem

The present disclosure is designed to solve the problems of the related art, and therefore the present disclosure is directed to providing a battery module configured to effectively suppress a fire even if spark, flare, or the like is generated therein due to thermal propagation, and a battery pack and an energy storage system including the same.

However, the technical problems to be solved by the present disclosure are not limited to the above, and other problems not mentioned herein will be clearly understood by those skilled in the art from the following disclosure.

### Technical Solution

In one aspect of the present disclosure, there is provided a battery module, comprising: a cell assembly including a plurality of secondary batteries stacked on each other; and a module case including a lower plate, a side plate and an upper plate to form an inner space so that the cell assembly is accommodated therein, the module case including a trap unit formed in at least a part of an inner surface of the side plate to be concave outward, the trap unit being formed to be biased in a front or rear direction.

Here, the trap unit may be formed to protrude outward at an outer surface of the side plate.

In addition, in the cell assembly, the plurality of pouch-type secondary batteries may be stacked in a vertical direction in a laid-down state, an electrode lead of the pouch-type secondary battery may be located in a front and rear direction of the module case, and the module case may be configured such that at least one of front and rear sides thereof is opened.

In addition, when gas is generated from the cell assembly, the module case may be configured to discharge the generated gas to at least one of front and rear sides.

In addition, the trap unit may be configured to be located at only one side based on a center line in a front and rear direction of the side plate.

In addition, the side plate may include a left plate and a right plate, the trap unit may include a left trap unit formed at the left plate and a right trap unit formed at the right plate, and the left trap unit and the right trap unit may be configured to be located at opposite sides based on a center line in a front and rear direction of the side plate.

In addition, at least a part of the trap unit may be formed such that a depth of the concave portion thereof gradually increases in a front or rear direction.

In addition, the side plate may further include a guide unit formed to be inclined toward the trap unit.

In addition, the module case may further include a protrusion formed at a front end or a rear end of the trap unit to protrude in a central direction.

In addition, a front end or a rear end of the trap unit may be formed to be concave in a front or rear direction.

In another aspect of the present disclosure, there is also provided a battery pack, comprising the battery module according to the present disclosure.

In another aspect of the present disclosure, there is also provided an energy storage system, comprising the battery module according to the present disclosure.

### Advantageous Effects

According to the present disclosure, it is possible to effectively prevent a fire from occurring in a battery module.

In particular, according to an embodiment of the present disclosure, even if spark, flare, or the like is generated due to a thermal propagation phenomenon in a specific battery cell included in the battery module, it is possible to effectively prevent the spark, flare, or the from being discharged to the outside.

Therefore, according to this embodiment of the present disclosure, the occurrence of fire caused by external emission of spark or the like may be suppressed.

Moreover, according to an embodiment of the present disclosure, it is possible to prevent spark or the like from leaking while easily discharging gas to the outside of the battery module. Therefore, it is possible to prevent the explosion of the battery module and fundamentally prevent a fire from occurring outside the battery module.

In addition, according to an embodiment of the present disclosure, even if a fire occurs inside the battery module, the fire can be rapidly extinguished without spreading by blocking the discharge of flame.

In addition, according to an embodiment of the present disclosure, when a plurality of battery modules are disposed, it is possible to prevent the volume of the battery modules from increasing while securing a fire suppression effect for each battery module. Therefore, according to this embodiment of the present disclosure, when a battery pack or an energy storage system is configured using a plurality of battery modules, it is possible to reduce the volume and increase the energy density.

In addition, the present disclosure may have various other effects, and such effects will be described in each embodiment, or any effect that can be easily inferred by those skilled in the art will not be described in detail.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a perspective view schematically showing a configuration of a battery module according to an embodiment of the present disclosure.
FIG. 2 is an exploded perspective view showing some components of FIG. 1.
FIG. 3 is a diagram showing the battery module according to an embodiment of the present disclosure, viewed from the above.
FIG. 4 is a diagram schematically showing the spark trapping effect when spark occurs at some secondary batteries in the battery module according to an embodiment of the present disclosure.
FIG. 5 is a top view schematically showing a configuration in which two battery modules are arranged in a horizontal direction according to an embodiment of the present disclosure.
FIG. 6 is a perspective view showing a cell assembly separated from the battery module according to an embodiment of the present disclosure.
FIG. 7 is a top view schematically showing a battery module according to another embodiment of the present disclosure.
FIG. 8 is a top view schematically showing a battery module according to still another embodiment of the present disclosure.
FIG. 9 is an enlarged view showing the portion E1 of FIG. 8.
FIG. 10 is a top view schematically showing a battery module according to still another embodiment of the present disclosure.
FIG. 11 is a top view showing a configuration in which two battery modules of FIG. 10 are arranged in a left and right direction.
FIG. 12 is a top view schematically showing a battery module according to still another embodiment of the present disclosure.
FIG. 13 is a top view schematically showing a battery module according to still another embodiment of the present disclosure.
FIGS. 14 and 15 are top views schematically showing battery modules according to still other embodiments of the present disclosure.
FIG. 16 is a top view schematically showing a battery module according to still another embodiment of the present disclosure.
FIG. 17 is a top view schematically showing a battery module according to still another embodiment of the present disclosure.
FIG. 18 is a top view schematically showing a battery module according to still another embodiment of the present disclosure.
FIG. 19 is an enlarged view showing the portion A6 of FIG. 18.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, not intended to limit the scope of the disclosure, so it should be understood that other equivalents and modifications could be made thereto without departing from the scope of the disclosure.

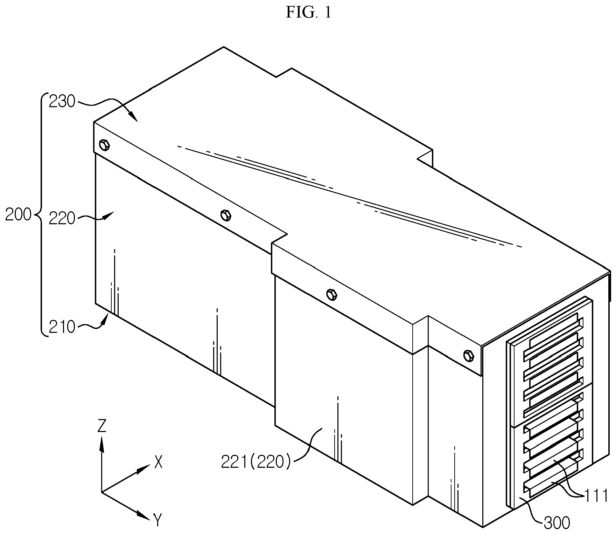

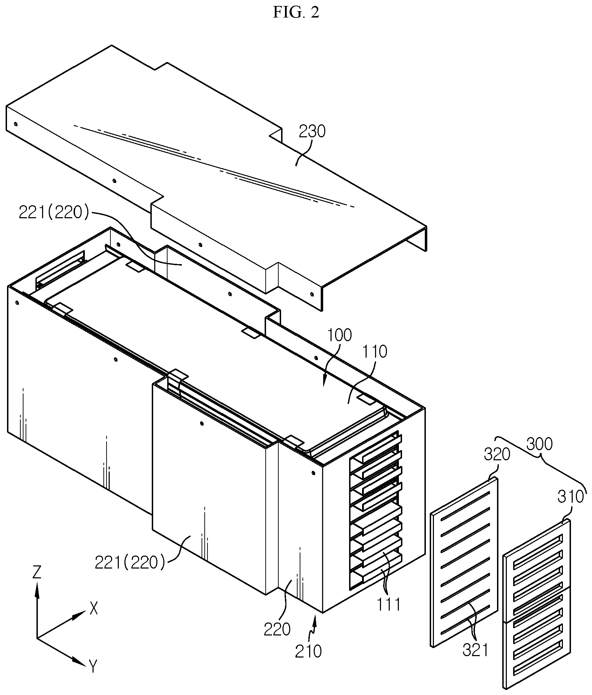

FIG. 1 is a perspective view schematically showing a configuration of a battery module according to an embodiment of the present disclosure, and FIG. 2 is an exploded perspective view showing some components of FIG. 1.

Referring to FIGS. 1 and 2, the battery module according to the present disclosure includes a cell assembly 100 and a module case 200.

The cell assembly 100 may include a plurality of secondary batteries 110 (battery cells). The secondary battery 110 may include an electrode assembly, an electrolyte and a battery case. In particular, as shown in FIGS. 1 and 2, the secondary battery 110 may be a pouch-type secondary battery. However, other types of secondary batteries 110, such as a cylindrical battery or a prismatic battery, may also be adopted as the cell assembly 100.

The plurality of secondary batteries 110 may be stacked on each other to form the cell assembly 100. For example, as shown in the drawings, the plurality of secondary batteries 110 may be stacked in an upper and lower direction (Z-axis direction on the drawing). Each pouch-type secondary battery 110 may include electrode leads 111, which may be located at both ends or at one end of each secondary battery 110. A secondary battery 110 in which the electrode leads 111 protrude in both directions is called a bidirectional cell, and a secondary battery in which the electrode leads 111 protrude in one direction is called a unidirectional cell. For example, the secondary battery 110 shown in FIGS. 1 and 2 is a bidirectional cell, and it may be regarded that the electrode leads 111 are positioned at both ends in the Y-axis direction. The present disclosure is not limited by any specific type or form of the secondary battery 110, and various types of secondary batteries 110 known at the time of filing of this application may be employed in the cell assembly 100 of the present disclosure.

The module case 200 may have an empty space formed therein and be configured to accommodate the cell assembly 100. Moreover, the module case 200 may include a lower plate 210, a side plate 220 and an upper plate 230, as shown in the drawings. The module case 200 may be manufactured by integrating at least some plates, or may be configured by coupling some plates to each other in a fastening method using bolts or welding. For example, the lower plate 210 and the side plate 220 may be manufactured integrally with each other to form a lower case.

The lower plate 210, the side plate 220 and the upper plate 230 may define an inner space, and the cell assembly 100 may be accommodated in the inner space. For example, the lower plate 210 and the side plate 220 may be formed in a U-shape or a box shape to constitute a lower case. In addition, the upper plate 230 may be coupled to an upper open end of the lower case to cover the upper end of the cell assembly 100. As shown in the drawings, the upper plate 230 may be configured in a shape in which both left and right ends are bent, but may be formed in various other shapes to be coupled with the side plate 220. Alternatively, the module case 200 may be formed in the form of a mono frame in which the lower plate 210, the side plate 220 and the upper plate 230 are integrated.

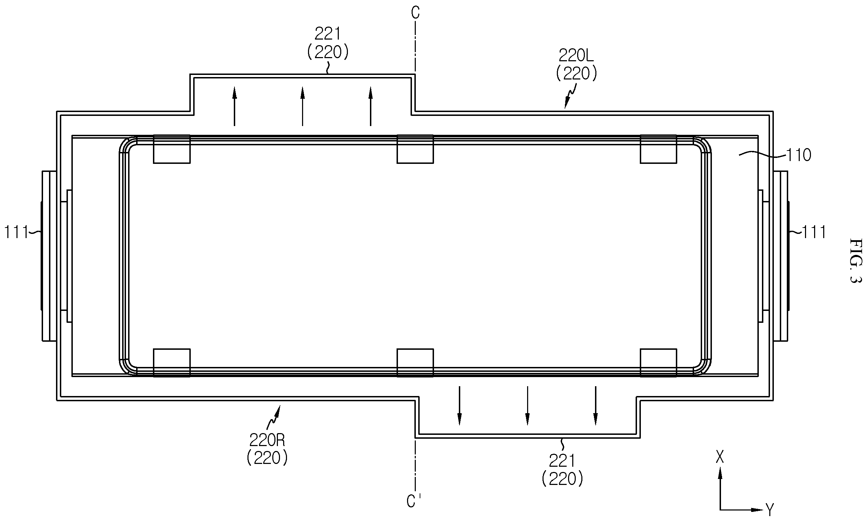

In particular, in the present disclosure, the module case 200 may include a trap unit 221. The trap unit 221 may be formed on the side plate 220, particularly on the inner surface of the side plate 220. In addition, the trap unit 221 may be formed at least a part of the inner surface of the side plate 220 to be concave outward. Also, the trap unit 221 may be formed to be biased in a front or rear direction. This will be further described with reference to FIG. 3.

FIG. 3 is a diagram showing the battery module according to an embodiment of the present disclosure, viewed from the above. For example, FIG. 3 may be regarded as a diagram showing the battery module of FIGS. 1 and 2, viewed from the above, in a state where the upper plate 230 is excluded.

Referring to FIG. 3, the side plate 220 may include a trap unit 221 having an inner surface that is concave in the outer direction in at least a partial region thereof. Here, the outer direction may mean a direction opposite to the direction in which the battery cell is located, namely an outer direction of the battery module. For example, in the configuration of FIG. 3, the side plate 220 located in the +X-axis direction based on the secondary battery may include a trap unit 221 in which a partial inner surface is concave in the outer direction (+X-axis direction) as indicated by arrows. In addition, in the configuration of FIG. 3, the side plate 220 located in the -X-axis direction based on the secondary battery may include a trap unit 221 in which a partial inner surface is concave in the outer direction (-X-axis direction) as indicated by arrows.

Meanwhile, hereinafter, unless otherwise specified, based on the cell assembly 100, the +X-axis direction also represents a left direction, and the -X-axis direction represents a right direction. In addition, based on the cell assembly 100, the +Y-axis direction also represents a front direction, and the -X-axis direction represents a rear direction. In addition, a direction toward the center of the battery module, for example a direction in which the cell assembly 100 is located, is indicated as an inner direction, and a direction toward the outside of the battery module is indicated as an outer direction.

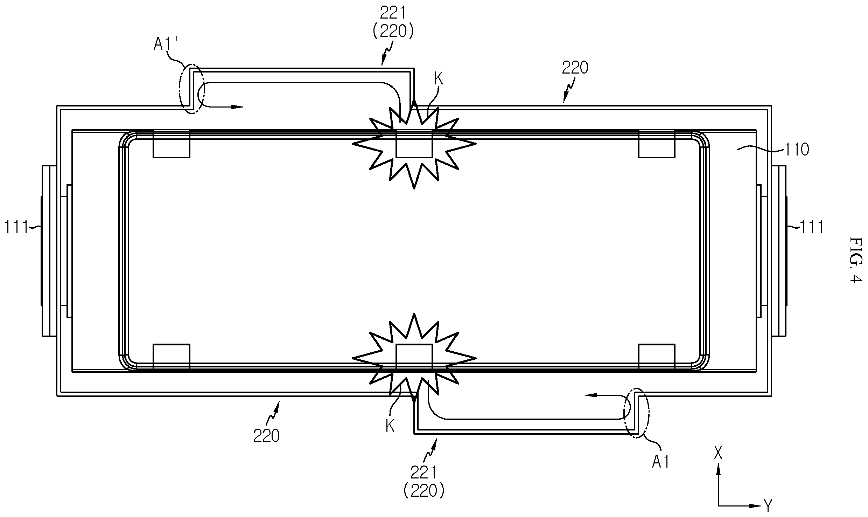

According to this configuration of the present disclosure, by the trap unit 221 formed at the module case 200, it is possible to effectively prevent high-temperature spark or flare from leaking out to the outside of the module case 200. This will be described in more detail with reference to FIG. 4.

FIG. 4 is a diagram schematically showing the spark trapping effect when spark occurs at some secondary batteries 110 in the battery module according to an embodiment of the present disclosure.

Referring to FIG. 4, as indicated by K, when spark is ejected from a specific secondary battery 110, the ejected spark may be trapped by the trap unit 221 of the side plate 220. That is, the spark ejected from the secondary battery 110 may be discharged into the inner space of the module case 200, and the trap unit 221 is present in the inner space of the module case 200. In addition, the spark flows into the concave portion of the trap unit 221 and moves along the concave shape, and then the movement of the spark may be blocked at the end of the concave portion.

For example, inside the trap unit 221, the spark may move as indicated by the arrow in FIG. 4, and at the end of the trap unit 221 in the horizontal direction as indicated by A1 and A1', the movement of the spark may be blocked or the movement direction of the spark may be changed. Accordingly, the trap unit 221 may allow the spark generated inside the module case 200 to be trapped in the concave space therein. Therefore, spark or the like may not be discharged to the outside of module case 200. According to this implementation effect, it is possible to prevent spark or the like from contacting oxygen existing outside the module case 200, thereby reducing the risk of fire. Also, in this case, it is possible to prevent spark or the like from moving to other components outside the battery module, for example another battery module to cause a fire in the corresponding battery module.

Moreover, the trap unit 221 may be configured to be biased in a front or rear direction at the side plate 220.

For example, as shown in FIG. 3, the trap unit 221 of the side plate 220 located in the +X-axis direction, namely in the left direction, with respect to the cell assembly 100 may be formed to be biased in the rear direction (-Y-axis direction). In addition, the trap unit 221 of the side plate 220 located in the -X-axis direction, namely in the right direction, with respect to the cell assembly 100 may be formed to be biased in the front direction (+Y-axis direction). That is, if the center line in the front and rear direction of the side plate 220 is C-C', the trap unit 221 may not be located at the central portion of the line C-C', but may be located to be biased toward the front side or the rear side.

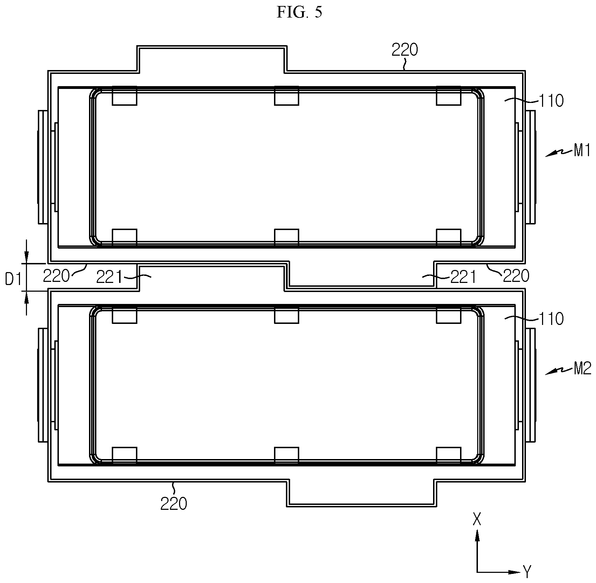

According to this configuration of the present disclosure, even if the trap unit 221 is formed on the side surface of the module case 200, when the plurality of battery modules are stacked, it is possible to prevent the volume of the battery modules from increasing due to the trap unit 221. This will be described in more detail with reference to FIG. 5.

FIG. 5 is a top view schematically showing a configuration in which two battery modules are arranged in a horizontal direction according to an embodiment of the present disclosure.

Referring to FIG. 5, as indicated by M1 and M2, two battery modules according to the present disclosure, for example, two battery modules as shown in FIGS. 3 and 4, may be stacked in the lateral direction, namely in the X-axis direction. At this time, in the battery module according to the present disclosure, the trap unit 221 may protrude on the side plate 220 in the outer direction (X-axis direction). Here, even if two battery modules M1 and M2 are stacked in the lateral direction (X-axis direction), the volume increase due to the trap unit 221 may not be large.

That is, even if the two battery modules M1 and M2 are stacked so that the side plates 220 thereof face each other, the distance between the main bodies of the two battery modules M1 and M2 may be approximately similar to the depth of the trap unit 221, as indicated by D1. In other words, even if the trap unit 221 is formed on each of the side plates 220 of the two battery modules M1 and M2 facing each other, the distance between the main bodies of the two battery modules M1 and M2 may be close to about one time of the depth of the trap unit 221, rather than two times thereof. In addition, this may be possible because the trap unit 221 is formed to be biased toward the front or rear at the side plate 220, as in the configuration of the present disclosure.

In particular, the trap unit 221 may be formed to protrude on the outer surface of the side plate 220 in the outer direction.

For example, seeing the configuration shown in FIG. 4, the trap unit 221 of the side plate 220 located in the +X-axis direction with respect to the cell assembly 100 may have an outer surface formed to protrude convex in the outer direction (+X-axis direction), corresponding to the shape where an inner surface is concave in the outer direction (+X-axis direction). In addition, the trap unit 221 of the side plate 220 located in the -X-axis direction with respect to the cell assembly 100 may have an outer surface formed to protrude convex in the outer direction (-X-axis direction), corresponding to the shape where an inner surface is concave in the outer direction (-X-axis direction). That is, the side plate 220 may be formed such that an outer surface in a region where the trap unit 221 is positioned is convex and am outer surface in a region where the trap unit 221 is not positioned is concave.

According to this configuration of the present disclosure, when a plurality of battery modules are stacked, it is possible to reduce an increase in volume due to the trap unit 221. That is, when the side plate 220 is viewed from the outside, it may be regarded that only the portion where the trap unit 221 is located protrudes (convex portion) and the remaining portion is formed concave (concave portion). Accordingly, when a battery module is stacked on another battery module, the trap unit 221 of the adjacent another battery module may be inserted into the concave portion.

In addition, according to this configuration of the present disclosure, the coupling property between the battery modules may be improved by the coupling between the convex portion and the concave portion formed at the outer surface of the battery module. For example, in the configuration of FIG. 5, the movement of two battery modules M1 and M2 in the Y-axis direction may be restricted due to the coupling of the convex portion and the concave portion of the side plates 220. In particular, the movement of the first battery module M1 in the -Y-axis direction may be restricted by the second battery module M2, and the movement of the second battery module M2 in the +Y-axis direction may be restricted by the first battery module M1.

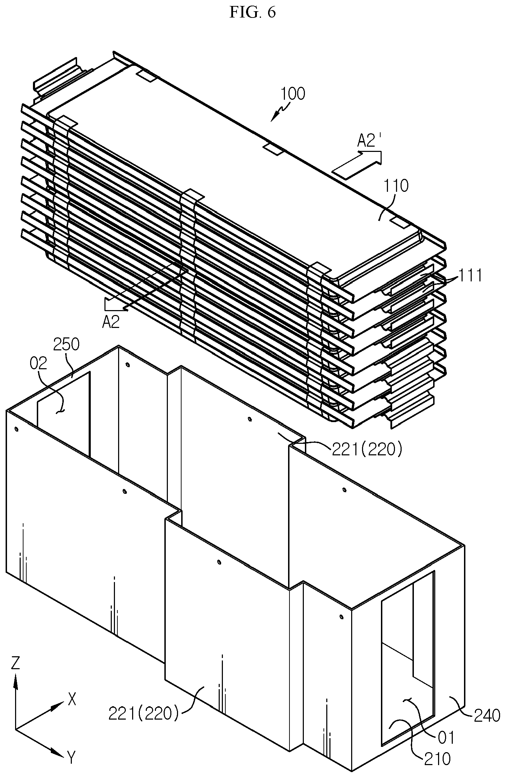

The cell assembly 100 may be configured such that a plurality of pouch-type secondary batteries 110 are stacked in the upper and lower direction in a laid-down state. This will be described in more detail with reference to FIG. 6.

FIG. 6 is a perspective view showing a cell assembly 100 separated from the battery module according to an embodiment of the present disclosure.

Referring to FIG. 6, in the battery module according to the present disclosure, the secondary battery 110 included in the cell assembly 100 is a pouch-type secondary battery 110 and may be disposed in a laid-down state. In particular, the pouch-type secondary battery 110 may have approximately two wide surfaces, and may be disposed in a laid-down shape such that the two wide surfaces face upward and downward. For example, the X-Y plane of FIG. 6 may form the same plane as the lower plate 210 of the module case 200. On the X-Y plane, one surface of the secondary battery 110 stacked at the bottom may be seated. In addition, the secondary batteries 110 in a laid-down form may be stacked in the upper and lower direction (Z-axis direction in the drawing) so that their upper and lower surfaces face each other.

According to this configuration of the present disclosure, the sealing portions of all secondary batteries 110 may be configured to face the trap unit 221 of the side plate 220. Therefore, even if spark or the like is discharged from any secondary battery 110, the discharged spark may be trapped by the trap unit 221. For example, in the configuration of FIG. 6, even if spark is formed in any secondary battery 110 among the secondary batteries 110 stacked in the upper and lower direction and is discharged in a direction indicated by arrows A2 and A2', the discharged spark may be directed toward the trap unit 221 of the side plate 220. Therefore, for all the stacked secondary batteries 110, when spark is ejected, the trap unit 221 may cope with the spark.

In particular, the cell assembly 100 may be configured such that the electrode lead 111 of the pouch-type secondary battery 110 is located in the front and rear direction of the module case 200. For example, referring to FIG. 6, in each of the pouch-type secondary batteries 110 provided in the cell assembly 100 may be configured such that the electrode lead 111 is directed to the front (+Y-axis direction) or to the rear (-Y-axis direction).

In addition, the module case 200 may be configured such that at least one of front and rears thereof is open. For example, referring to the configuration of FIG. 6, the module case 200 may include a front plate 240 and a rear plate 250. In this case, the front plate 240 may be configured such that a part thereof is opened, like a portion indicated by O1. Also, the rear plate 250 may be configured such that a part thereof is open, like a portion indicated by O2.

According to this configuration of the present disclosure, when spark is ejected from the cell assembly 100 together with gas, it is possible to allow the gas to be smoothly discharged to the outside of the module case 200 and suppress the spark from being discharged to the outside of the module case 200. For example, referring to the configuration shown in FIG. 6, if gas and spark are discharged in A2 and A2' directions, the gas may be discharged to the front open portion O1 or the rear open portion O2 with its flow being not greatly disturbed by the trap unit 221. Accordingly, even when gas is generated from the cell assembly 100, the internal pressure of the module case 200 is prevented from increasing to a certain level or above, thereby suppressing the explosion of the battery module. Meanwhile, spark or the like may contain particles or substances in a solid, liquid, gel or sol state, and the movement of the spark or the like in this state may be hindered by the trap unit 221 as illustrated in FIG. 4. Therefore, according to this configuration of the present disclosure, the effect of preventing both the explosion of the battery module and the external leakage of spark or the like may be achieved.

In particular, according to this embodiment, in the module case 200, the trap unit 221 for blocking spark may be provided to the side plate 220, and the open portions O1, O2 through which gas is discharged may be located at the front and/or rear side of the module case 200. Here, the trap unit 221 may be positioned to face a side surface of the sealing portion of the secondary battery 110 where the electrode lead 111 is not positioned. In addition, the open portions O1, O2 may be positioned to face a side surface of the sealing portion of the secondary battery 110 where the electrode lead 111 is positioned. In the pouch-type secondary battery 110, if the internal pressure increases due to thermal runaway or the like, the gas may be highly likely to be discharged by the explosion mainly through a portion where the electrode lead 111 is not located. That is, in the configuration of FIG. 4, when the secondary battery 110 explodes, the explosion site is highly likely to be the sealing portion at both ends in the ±X-axis direction (left and right ends), and explosion may not easily occur in the sealing portion at both ends in the ±Y-axis direction (front and rear ends).

More specifically, the pouch-type secondary battery 110 may be formed in an approximately rectangular shape in a laid-down state, when viewed from the above. At this time, the pouch-type secondary battery 110 may be configured such that four sealing portions thereof surround the periphery of the accommodation portion. Here, the left and right sealing portions (wing portions) where the electrode lead 111 is not located are often formed longer than the front and rear sealing portions (terrace portions) where the electrode lead 111 is located.

Therefore, there is a high possibility that the gas and spark caused by explosion are ejected in the same direction as the arrows A2 and A2' of FIG. 6, namely at the left and right sealing portions (wing portions). However, according to this embodiment, the trap unit 221 may exist in a portion where the gas and spark are ejected or flow. In particular, the spark may inevitably pass through the trap unit 221 before heading to the open portions O1, O2. Therefore, as shown in FIG. 4, the movement of spark may be suppressed by the trap unit 221. Therefore, according to this embodiment, the spark emission blocking effect of the trap unit 221 may be further improved.

Meanwhile, in the former embodiment such as FIG. 6 or the like, the left and right sealing portions of each pouch-type secondary battery 110 of the cell assembly 100 are shown to be folded upward. According to this configuration, the volume of the cell assembly 100 may be reduced. However, this is only an example, and the present disclosure is not necessarily limited to this form.

In addition, the battery module according to the present disclosure may further include a bus bar assembly 300 as shown in FIGS. 1 and 2.

The bus bar assembly 300 may be located in the open portions O1, O2 of the module case 200. In particular, the electrode lead 111 of the cell assembly 100 may be positioned in the open portions O1, O2 of the module case 200. Accordingly, the bus bar assembly 300 may be configured to be coupled with the electrode lead 111 of the cell assembly 100.

For example, referring to FIG. 2, the cell assembly 100 may be configured such that the electrode leads 111 are positioned at both ends in the Y-axis direction and both ends O1, O2 of the module case 200 in the Y-axis direction are opened correspondingly. In addition, the bus bar assembly 300 may be coupled to the open portion O1, O2. If the electrode leads 111 of the cell assembly 100 are positioned to protrude only in one side of the battery module, for example in the +Y-axis direction, the module case 200 may be configured to be opened only in the +Y-axis direction. The module case 200 may be configured to be closed except for the open portion to which the bus bar assembly 300 is coupled. Accordingly, when gas is generated inside the module case 200, the generated gas may be discharged only to the side where the bus bar assembly 300 is located.

As described above, the bus bar assembly 300 may be configured to be positioned on at least one side of the module case 200, for example at both front and rear ends of the module case 200 (both ends in the Y-axis direction in FIG. 2). In addition, the bus bar assembly 300 may include a module bus bar 310 and a bus bar housing 320.

Here, the module bus bar 310 may be made of an electrically conductive material, for example a metal material such as copper or nickel. In addition, the module bus bar 310 may be configured to be electrically connected to the electrode leads 111 of the cell assembly 100. In particular, the module bus bar 310 may be welded or bolted in direct contact with the electrode leads 111. In addition, the module bus bar 310 may electrically connect the electrode leads 111 to each other or transmit voltage information sensed from the electrode leads 111 to an external control unit, for example a BMS (Battery Management System).

In addition, the bus bar housing 320 may be configured so that the module bus bar 310 may be placed thereon. For example, the bus bar housing 320 may have a portion with a shape corresponding to the surface of the module bus bar 310, for example a planar shape, as a placing portion so that the module bus bar 310 is placed thereon. In addition, the bus bar housing 320 may support the module bus bar 310 so that the placed module bus bar 310 may stably maintain its position. For example, the bus bar housing 320 may allow the module bus bar 310 to be coupled and fixed using various fastening methods such as bolting, riveting, fusion, insertion and bonding. The bus bar housing 320 may be made of an electrically insulating material, such as plastic (polymer), such that it is not electrically connected to the module bus bar 310. In addition, the bus bar housing 320 may be coupled and fixed to the module case 200, especially to the front plate 240 or the rear plate 250. At this time, the bus bar housing 320 and the module case 200 may be coupled in various ways such as bolting, riveting, fusion, insertion, and bonding.

The bus bar housing 320 may have a slot 321 through which the electrode lead 111 passes. In general, for the stable coupling, the module bus bar 310 may be placed on the outer surface of the bus bar housing 320, and the electrode lead 111 may pass through the slot 321 at the inner side of the bus bar housing 320 and then come into contact with the outer surface of the module bus bar 310 located at an outer side.

The slot 321 may be formed in a shape corresponding to the shape of the electrode lead 111 so that the electrode lead 111 may easily pass therethrough. For example, as shown in the drawings, the slot 321 may be formed to be elongated in the left and right direction (X-axis direction in the drawing). In addition, a plurality of slots 321 may be formed in the bus bar housing 320. Moreover, if the pouch-type secondary batteries 110 are stacked in the vertical direction (Z-axis direction in the drawing), a plurality of electrode leads 111 may exist in the vertical direction. Accordingly, as shown in FIG. 2, the plurality of slots 321 may also be arranged to be spaced apart from each other by a predetermined distance in the vertical direction.

The slot 321 may serve to penetrate the electrode lead 111 and support the electrode lead 111, and may additionally serve to discharge a vent gas. The slot 321 may have an empty gap around the electrode lead 111 in a state where the electrode lead 111 passes therethrough. In addition, the other part of the module case 200 may be configured in an almost sealed form. In this case, if a vent gas is generated due to a thermal propagation situation or the like in at least one of the secondary batteries 110 included in the cell assembly 100, the gas may increase the pressure inside the battery module. However, since the slot 321 has an empty gap formed around the electrode lead 111, the gas inside the battery module may be discharged to the outside through the slot 321. However, spark, flare, or the like other than gas may be prevented from being discharged to the outside by the trap unit 221, as described above.

As in the embodiment described above, in the battery module according to the present disclosure, the module case 200 may be configured such that, when gas is generated from the cell assembly 100, the generated gas is discharged to at least one of the front and rear sides. In particular, in the module case 200, the part where gas is discharged to the outside may be the slot 321 of the bus bar assembly. In addition, in this configuration, the trap unit 221 may be formed at the side plate 220 of the module case 200. That is, the trap unit 221 may be formed at the left plate 220L and the right plate 220R of the module case 200.

According to this configuration of the present disclosure, the gas, spark or the like discharged from the cell assembly 100 may pass through the trap unit 221 before leaking out of the module case 200. Accordingly, the gas in a gas state is smoothly discharged to the outside of the module case 200, but the spark in a non-gas state may be prevented from being discharged to the outside of the module case 200 by the trap unit 221.

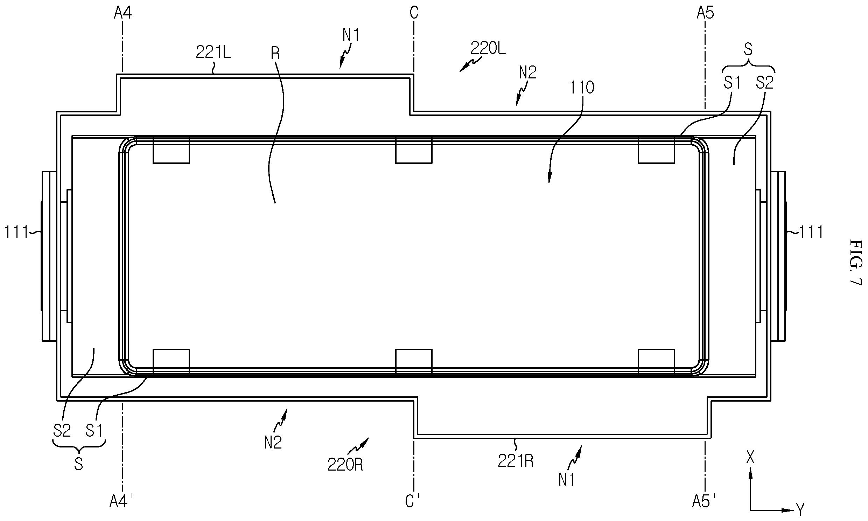

In the battery module according to the present disclosure, the trap unit 221 may be configured to be located only at one side based on the center line of the side plate 220 in the front and rear direction. This will be described in more detail with reference to FIG. 7.

FIG. 7 is a top view schematically showing a battery module according to another embodiment of the present disclosure.

In the configuration of FIG. 7, the front and rear direction of the side plate 220 may be referred to as ±Y-axis direction. In addition, with respect to the side plate 220, the center line in the front and rear direction may be the line C-C'. At this time, the trap unit 221 may be configured to be located only in the front direction (+Y-axis direction) or in the rear direction (-Y-axis direction) based on the line C-C'. In particular, the trap unit 221 may be configured to be located only in one of the front direction and the rear direction, without passing over the line C-C'.

According to this configuration of the present disclosure, when a plurality of battery modules are stacked in the left and right direction (X-axis direction), mutual interference caused by the trap units 221 may be reduced. That is, as shown in FIG. 7, the convex portion N1 in which the trap unit 221 is formed and the concave portion N2 in which the trap unit 221 is not formed may be formed at the side plate 220 based on the outer surface. At this time, as shown in FIG. 5, when two battery modules are horizontally stacked on each other, the convex portion N1 may be inserted into the concave portion N2 of the other battery module without being interfered by the convex portion N1 of the other battery module. Therefore, according to this configuration, when a plurality of battery modules are stacked, the volume may be reduced.

As shown in FIG. 7, the side plate may include two side plates positioned in opposite directions to each other. Here, the two side plates may be a left plate 220L and a right plate 220R, which are configured to be respectively positioned at both ends in the X-axis direction with respect to the cell assembly.

In addition, the trap unit 221 may be formed on the left plate 220L and the right plate 220R, respectively. In this case, the trap unit 221 formed on the left plate 220L may be referred to as a left trap unit 221L, and the trap unit 221 formed on the right plate 220R may be referred to as a right trap unit 221R.

Here, the left trap unit 221L and the right trap unit 221R may be located at opposite sides with respect to the center line in the front and rear direction of the side plate 220.

For example, in FIG. 7, the left trap unit 221L may be configured to be positioned in the rear direction (-Y-axis direction) with respect to the line C-C', which is the center line in the front and rear directions in the left plate 220L. In addition, in FIG. 7, the right trap unit 221R may be configured to be positioned in the front direction (+Y-axis direction) with respect to the line C-C', which is the center line in the front and rear directions in the right plate 220R.

According to this configuration of the present disclosure, since the trap unit is respectively formed at the left plate 220L and the right plate 220R so that the trap units are arranged separately at the front and rear sides, it is possible to reduce the volume when a plurality of battery modules are stacked.

In addition, the trap unit 221 may extend to a portion where the terrace portion S2 is located, in the form of being elongated in the front direction (+Y-axis direction) or the rear direction (-Y-axis direction) from a portion close to the center of the side plate 220.

For example, referring to FIG. 7, the pouch-type secondary battery 110 provided in the cell assembly 100 is divided into the accommodation portion R in which the electrode assembly is accommodated, and the sealing portion S in which the upper pouch and the lower pouch are fused. In particular, the sealing portion S may include a wing portion S1 and a terrace portion S2 and be configured to surround the accommodation portion R.

At this time, the trap unit 221 may extend forward or rearward from the central portion of the side plate 220 in the front and rear direction to a portion where the terrace portion S2 of the pouch-type secondary battery 110 is located or extend further.

For example, the left trap unit 221L may be configured to extend in the rear direction (-Y-axis direction) from the portion close to the line C-C', and extend to the rear end at which at least the accommodation portion R of the pouch-type secondary battery 110 ends, as indicated by the line A4-A4'. In addition, the right trap unit 221R may be configured to extend in the front direction (+Y-axis direction) from the portion close to the line C-C' side, and extend to the front end at which at least the accommodation portion R of the pouch-type secondary battery 110 ends, as indicated by the line A5-A5'.

According to this configuration of the present disclosure, the trap unit 221 may cover the wing portion S1 of the pouch-type secondary battery 110 as much as possible. In particular, the left trap unit 221L may cover from the center of the wing portion S1 of the secondary battery to the rear end, and the right trap unit 221R may cover from the center of the wing portion S1 of the secondary battery to the front end. Therefore, when spark, flare, or the like is ejected at the wing portion S1 of the pouch-type secondary battery 110, the movement blocking effect by the trap unit 221 may be stably secured.

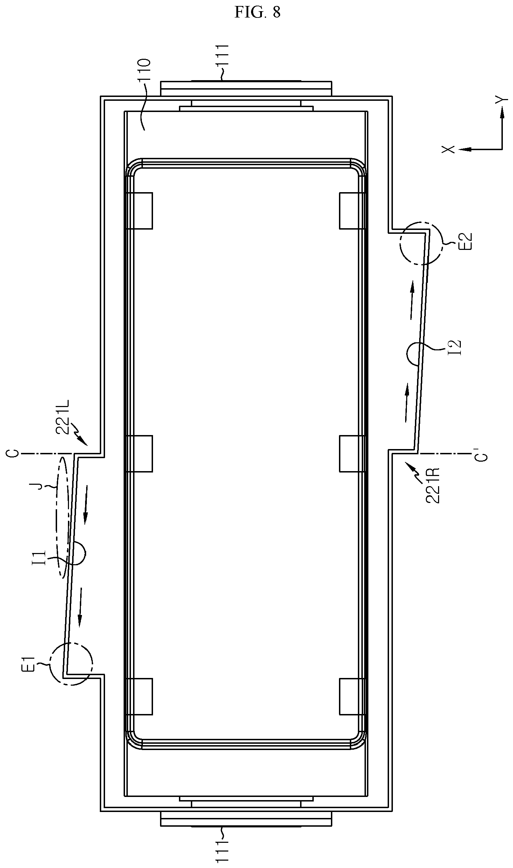

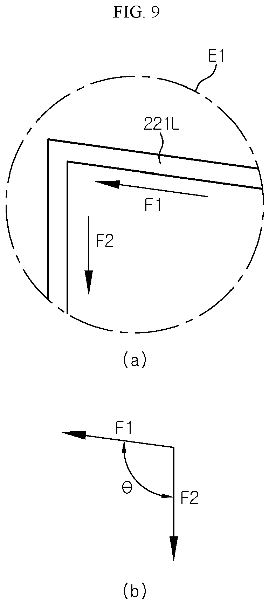

The trap unit 221 may be formed such that at least a part of the concave portion becomes deeper toward the front or rear side. This will be described in more detail with reference to FIGS. 8 and 9.

FIG. 8 is a top view schematically showing a battery module according to still another embodiment of the present disclosure. Also, FIG. 9 is an enlarged view showing the portion E1 of FIG. 8. With respect to this embodiment, features different from those of the former embodiments will be described in detail, and features substantially identical or similar to those of the former embodiments will not be described in detail again.

First, referring to FIG. 8, the right trap unit 221R may be configured such that the depth of the concave portion gradually increases in the front direction (+Y-axis direction) from a portion close to the center line (line C-C') of the side plate 220 in the front and rear direction. In addition, the left trap unit 221L may be configured such that the depth of the concave portion gradually increases in the rear direction (-Y-axis direction) from a portion close to the center line (line C-C') of the side plate 220 in the front and rear direction.

In particular, in this configuration, an inclined surface may be formed on the inner surface of the trap unit 221. For example, as in the portion indicated by 12 in the drawing, the right trap unit 221R may have an inclined surface whose depth increases in the front direction (+Y-axis direction). In addition, as in the portion indicated by I1 in the drawing, the left trap unit 221L may have an inclined surface whose depth increases in the rear direction (-Y-axis direction).

According to this configuration of the present disclosure, the effect of suppressing spark, flare, or the like by trap unit 221 may be further improved. In particular, the spark or the like ejected from the wing portion of the secondary battery 110 may move in the front and rear direction (±Y-axis direction) along the inclined surfaces I1, I2 of the trap unit 221. Then, if reaching the front and rear ends of the trap unit 221, the spark or the like may not move any more in the portion indicated by E1 and E2 and change its moving direction. In this case, the moving direction may be bent at an angle greater than 90°.

In this regard, more specifically, referring to FIG. 9, it may be regarded that the angle of the edge near the front and rear ends E1 and E2 of the left trap unit 221L is an acute angle. However, in view of the moving direction of the spark or the like, this may be regarded as an angle greater than 90°. That is, seeing (a) of FIG. 9, inside the E1 and E2, the spark or the like may move along the arrow F1 first, collide with the end of the E1 and E2 to change its direction, and then move along the arrow F2. In addition, if the arrows F1 and F2 have the same center point, the center point is as shown in (b) of FIG. 9. In this case, the angle (θ) formed by the arrows F1 and F2 may be an obtuse angle greater than 90°.

Therefore, according to this embodiment, since the moving direction of the spark or the like is converted to an obtuse angle larger than 90°, the trap unit 221 may more reliably suppress the spark or the like from moving in the outer direction.

Meanwhile, as shown in FIG. 8, if the outer surface of the trap unit 221 is formed to be inclined, when the side plate 220 is viewed from the outside, as indicated by J, the central portion may be regarded as being concave in the inner direction. In this case, when the plurality of battery modules are stacked in the horizontal direction, the concave portion J at the outer side formed due to the inclination of the trap unit 221 is a space between the battery modules and may be used as a flow path through which a cooling air or the like flows.

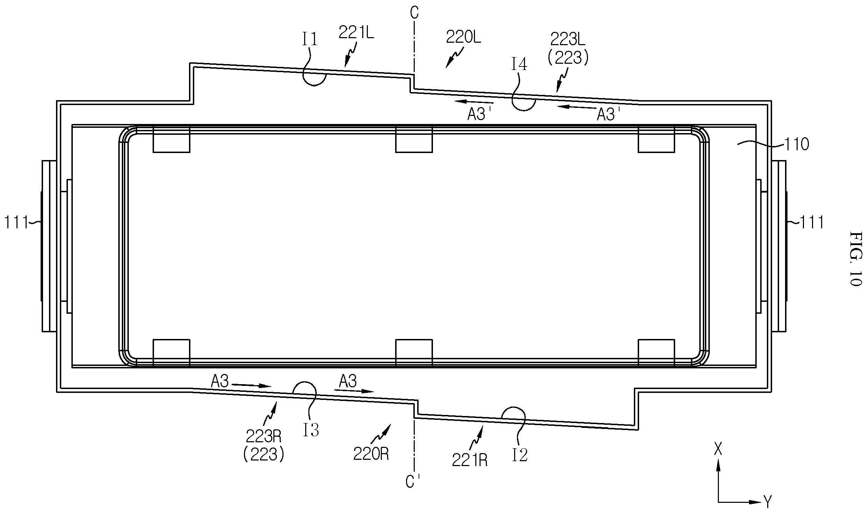

The side plate 220 may further include a guide unit 223 in addition to the trap unit 221. This will be described in more detail with reference to FIG. 10.

FIG. 10 is a top view schematically showing a battery module according to still another embodiment of the present disclosure. In this embodiment, features different from the former embodiments will also be described in detail.

Referring to FIG. 10, in the left plate 220L, the left trap unit 221L may be formed at the rear side (-Y-axis direction) with respect to the center line (line C-C') in the front and rear direction, and the left guide unit 223L may be formed at the front side (+Y-axis direction). Here, the left guide unit 223L may be formed in a concave shape compared to other parts of the left plate 220L except for the left trap unit 221L and configured to extend to the left trap unit 221L. In addition, as indicated by I4, the left guide unit 223L may be configured in an inclined shape. That is, the left guide unit 223L may be configured such that the depth of the concave portion increases in the rear direction (-Y-axis direction). In this case, the depth of the left guide unit 223L may be formed to be less than or equal to the depth of the left trap unit 221L.

In addition, in the right plate 220R, the right trap unit 221R may be formed at the front side (+Y-axis direction) with respect to the center line (line C-C') in the front and rear direction, and the right guide unit 223R may be formed at the rear side (-Y-axis direction). The right guide unit 223R may be formed in a concave shape compared to other parts of the right plate 220R except for the right trap unit 221R and configured to extend to the right trap unit 221R. In addition, as indicated by I3, the right guide unit 223R may be configured in an inclined shape. That is, the right guide unit 223R may be configured such that the depth of the concave portion increases in the front direction (+Y-axis direction). In this case, the depth of the right guide unit 223R may be formed to be less than or equal to the depth of the right trap unit 221R.

According to this configuration of the present disclosure, by the guide unit 223 such as the left guide unit 223L and the right guide unit 223R, the effect of trapping spark or the like may be further improved. For example, in the configuration of FIG. 10, the left trap unit 221L may be located only at the rear side. In this case. if spark or the like is generated at the left front side of the wing portion of the secondary battery, the spark or the like may move rearward along the inclined surface I4 of the left guide unit 223L and be induced to the left trap unit 221L (arrow A3'). In addition, the right trap unit 221R may be located only at the front side. In this case, if spark or the like is generated at the right rear side of the wing portion of the secondary battery, the spark or the like may move forward along the inclined surface 13 of the right guide unit 223R and be induced to the right trap unit 221R (arrow A3). Therefore, in this case, the spark may be trapped for the entire left and right wing portion of the secondary battery.

Moreover, in this embodiment, the inclined surface of the guide unit 223 may be configured to correspond to the inclined surface of the trap unit 221. This will be described in more detail with reference to FIG. 10.

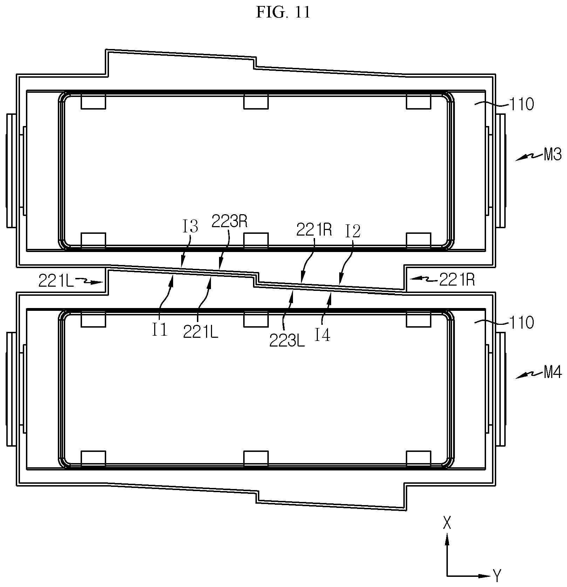

FIG. 11 is a top view showing a configuration in which two battery modules of FIG. 10 are arranged in a left and right direction. In this embodiment, also, features different from the former embodiments will also be described in detail.

Referring to FIG. 11, when two battery modules M3 and M4 are stacked in the left and right direction (X-axis direction), the shape of the inclined surface I3 of the right guide unit 223R of the third battery module M3 may be configured to correspond to the shape of the inclined surface I1 of the left trap unit 221L of the fourth battery module M4. In particular, the angle of the inclined surface I3 of the right guide unit 223R of the third battery module M3 may be configured to be identical or similar to the angle of the inclined surface I1 of the left trap unit 221L of the fourth battery module M4. In addition, the shape of the inclined surface I4 of the left guide unit 223L of the fourth battery module M4 may be configured to correspond to the shape of the inclined surface I2 of the right trap unit 221R of the third battery module M3. In particular, the angle of the inclined surface I4 of the left guide unit 223L of the fourth battery module M4 may be configured to be identical or similar to the angle of the inclined surface I2 of the right trap unit 221R of the third battery module M3.

If the inclined shape of the left guide unit 223L is configured to correspond to the inclined shape of the right trap unit 221R and the inclined shape of the right guide unit 223R is configured to correspond to the inclined shape of the left trap unit 221L with respect to the side plate 220 of each battery module as above, when a plurality of battery modules are horizontally stacked, the volume may be further minimized.

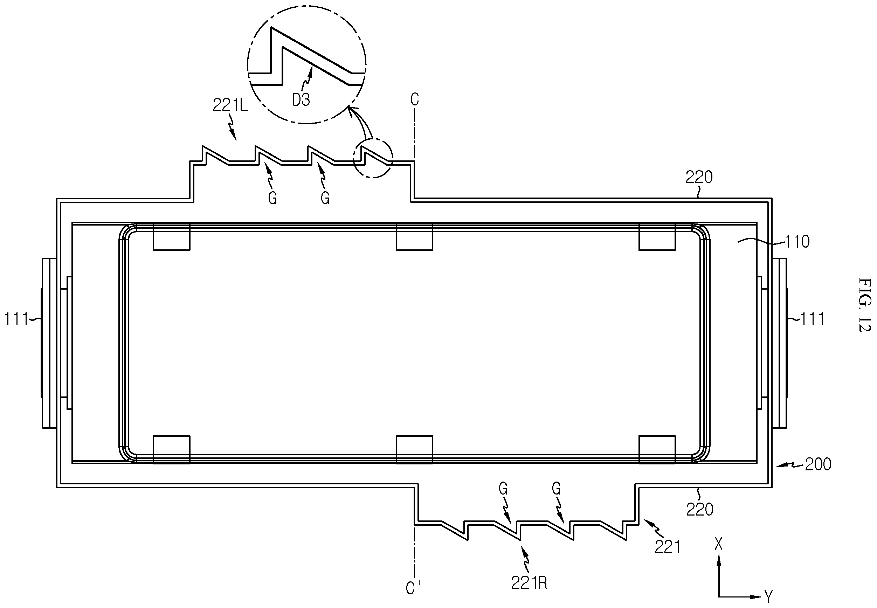

The trap unit 221 may be configured to have irregularities formed at the inner surface. This will be described in more detail with reference to FIG. 12.

FIG. 12 is a top view schematically showing a battery module according to still another embodiment of the present disclosure. For FIG. 12, features different from the former embodiments will also be described in detail.

Referring to FIG. 12, the trap unit 221 may be configured to have irregularities by forming a plurality of outwardly-concave grooves at the inner surface as indicated by G. In particular, the left trap unit 221L and the right trap unit 221R may be configured to have a plurality of grooves G, respectively.

According to this configuration of the present disclosure, the movement of the spark or the like may be disturbed by the irregularities formed on the inner surface of the trap unit 221, namely the plurality of grooves G. Therefore, the spark or the like may be further suppressed from being discharged to the outside through the open portions O1, O2 of the module case 200.

In particular, each groove G may be formed so that the depth of the concave portion increases from the central portion toward the front or rear side. For example, each of the plurality of grooves G formed at the left trap unit 221L has an inclined surface, as indicated by D3 in FIG. 12. The inclined surfaces D3 may be configured to become deeper in the rear direction (-Y-axis direction), which is a gas flow direction. In addition, each of the plurality of grooves G formed at the right trap unit 221R may also have an inclined surface, and the inclined surfaces may be configured to become deeper in the front direction (+Y-axis direction), which is a gas flow direction.

According to this configuration of the present disclosure, at each groove G, the moving direction of the spark or the like may be converted to an angle (obtuse angle) larger than a right angle. Therefore, the effect of suppressing movement of spark or the like by the trap unit 221 may be further improved.

Meanwhile, in the embodiment of FIG. 12, it is illustrated that a plurality of irregularities are formed in a state where the inner surface of the trap unit 221 is parallel to the front and rear direction (Y-axis direction), but the present disclosure is not limited to this embodiment. For example, the plurality of grooves G illustrated in FIG. 12 may also be formed at the inclined surface I1, I2 of each trap unit in the embodiment of FIG. 8 or at the inclined surface 13, I4 of each guide unit 223 in the embodiment of FIG. 10. In this case, the spark blocking effect by the inclined surface of the trap unit 221 or the like and the spark blocking effect by the irregularities are added, so the effect may be further enhanced.

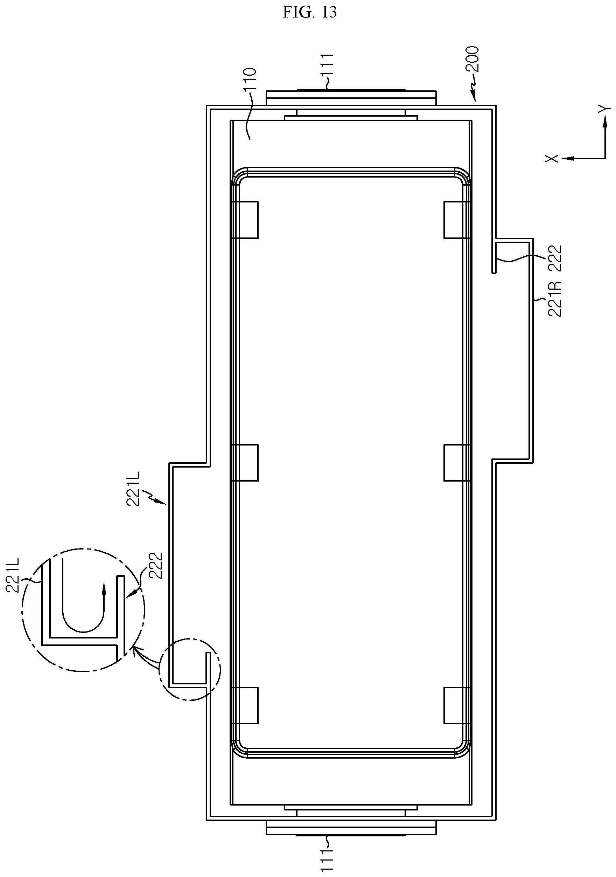

In addition, the module case 200 may further include a protrusion formed at a front end or a rear end of the trap unit 221 to protrude in the central direction. This will be described in more detail with reference to FIG. 13.

FIG. 13 is a top view schematically showing a battery module according to still another embodiment of the present disclosure. For FIG. 13, features different from the former embodiments will also be described in detail.

Referring to FIG. 13, the module case 200 may further include a protrusion 222 at the front end and/or the rear end of the trap unit 221. The protrusion 222 may be configured to protrude in the inner direction (central direction) of the trap unit 221 on the side plate 220 of the module case 200. For example, referring to FIG. 13 in which the rear end of the left trap unit 221L is enlarged, the protrusion 222 may be configured to protrude in the front direction (+Y-axis direction) so as to partially cover the rear end of the left trap unit 221L. In addition, the right trap unit 221R may also be configured such that the protrusion 222 protrudes in the rear direction (-Y-axis direction) at the front end thereof.

According to this configuration of the present disclosure, by blocking the movement of the spark or the like at the end of the trap unit 221 or further changing the moving direction of the spark or the like, it is possible to more effectively block the external discharge of the spark or the like. That is, the spark or the like introduced into the trap unit 221 may change its direction oppositely at the end of the trap unit 221, as indicated by the arrow in the enlarged view of FIG. 13. Therefore, in this case, the spark or the like may stay longer in the trap unit 221, and thereby, the effect of trapping spark or the like by the trap unit 221 may be further improved.

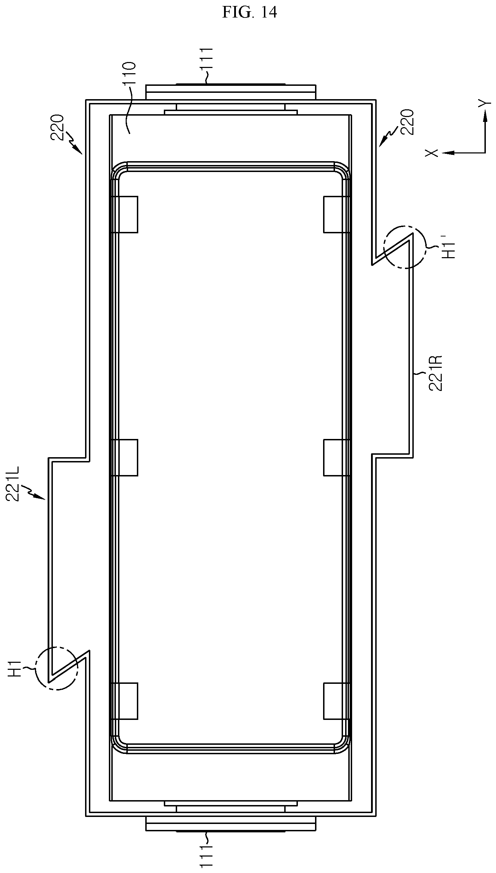

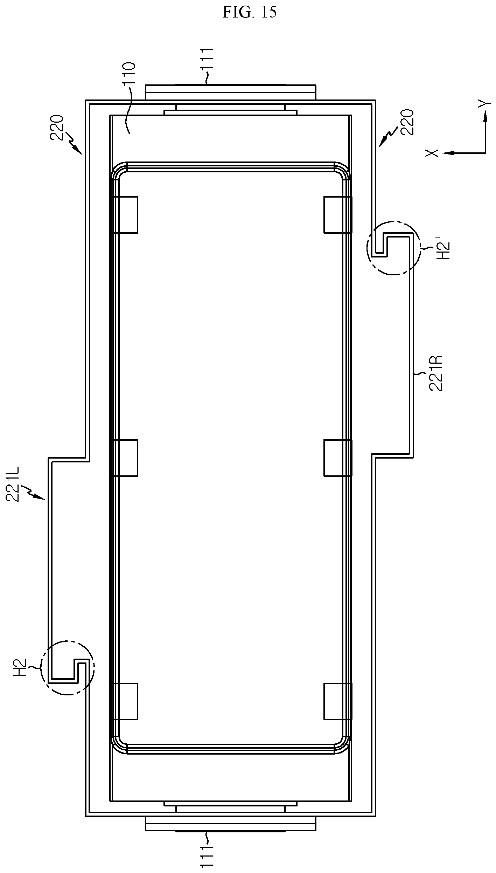

In addition, the front end or the rear end of the trap unit 221 may be concave to the front or to the rear. This will be described in more detail with reference to FIGS. 14 and 15.

FIGS. 14 and 15 are top views schematically showing battery modules according to still other embodiments of the present disclosure. For these embodiments, features different from the former embodiments will also be described in detail.

Referring to FIGS. 14 and 15, the trap unit 221 is formed at the side plate 220 of the module case 200, and the end of the trap unit 221 in the front and rear direction (Y-axis direction) may be formed to be more concave in the front and rear direction.

For example, in FIG. 14, the front end of the right trap unit 221R may be formed to be more concave in the front direction (+Y-axis direction) to provide a groove to the front, as indicated by H1'. In addition, in FIG. 14, the rear end of the left trap unit 221L may be formed to be more concave in the rear direction (-Y-axis direction) to provide a groove to the rear, as indicated by H1. In particular, in the configuration of FIG. 14, an inclined surface may be formed at the front and rear ends of the trap unit 221 to provide a groove (concave portion) at the front and rear ends of the trap unit 221.

As another example, in FIG. 15, the front end of the right trap unit 221R may be formed to be more concave in the front direction (+Y-axis direction) to provide a groove to the front, as indicated by H2'. In addition, in FIG. 15, the rear end of the left trap unit 221L may be more concave in the rear direction (-Y-axis direction) to provide a groove to the rear, as indicated by H2. In particular, in the configuration of FIG. 15, in order to provide a groove (concave portion) at the front and rear ends of the trap unit 221, the trap unit 221 may be formed to be more concavely recessed in the front and rear direction.

According to this configuration of the present disclosure, the effect of suppressing spark, flare, or the like by the trap unit 221 may be secured more stably. In particular, when spark, flare, or the like flows into the inner space of the trap unit 221, the spark or flare may not be easily leaked out from the inner space of the trap unit 221 by the concave portion located at the front and rear ends, while moving in the front and rear direction. Moreover, spark particles or the like may be inserted into the groove provided at the front and rear ends of the trap unit 221. Therefore, in this case, the effect of blocking the emission of spark and flare by trap unit 221 may be further improved.

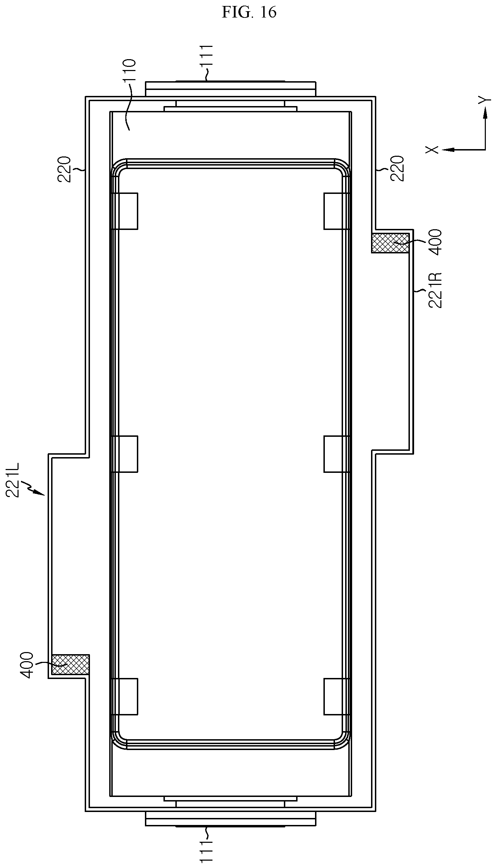

FIG. 16 is a top view schematically showing a battery module according to still another embodiment of the present disclosure. For this embodiment, features different from the former embodiments will also be described in detail.

Referring to FIG. 16, the battery module according to the present disclosure may further include a mesh member 400. The mesh member 400 may be configured to have a plurality of holes formed therein. For example, the mesh member 400 may be configured in a form in which a plurality of holes are provided in a plate-shaped member. Alternatively, the mesh member 400 may be configured in a mesh form in which different wires orthogonally intersect each other. In this case, the mesh member 400 may be easily manufactured, and a large number of holes may be formed while reducing the size of the holes. The mesh member 400 may be configured to be inserted into the inner space of the trap unit 221. In addition, the mesh member 400 may be disposed such that holes are arranged in the front and rear direction. In addition, the mesh member 400 may be disposed at the front end or the rear end of the trap unit 221. For example, in the left plate 220L, the mesh member may be disposed at the rear end of the left trap unit 221L. Also, in the right plate 220R, the mesh member may be disposed at the front end of the right trap unit 221R.

According to this embodiment configuration of the present disclosure, the movement of spark, flare, or the like may be further blocked by the mesh member 400. That is, if the spark or flare reaches the mesh member 400 while moving together with gas along the front and rear direction in the inner space of the trap unit 221, the gas in a gaseous state may easily pass through the mesh, but particles or the like included in the spark or flare may be filtered by the mesh member 400. Therefore, in this case, the effect of blocking the emission of spark, flare, or the like may be further improved.

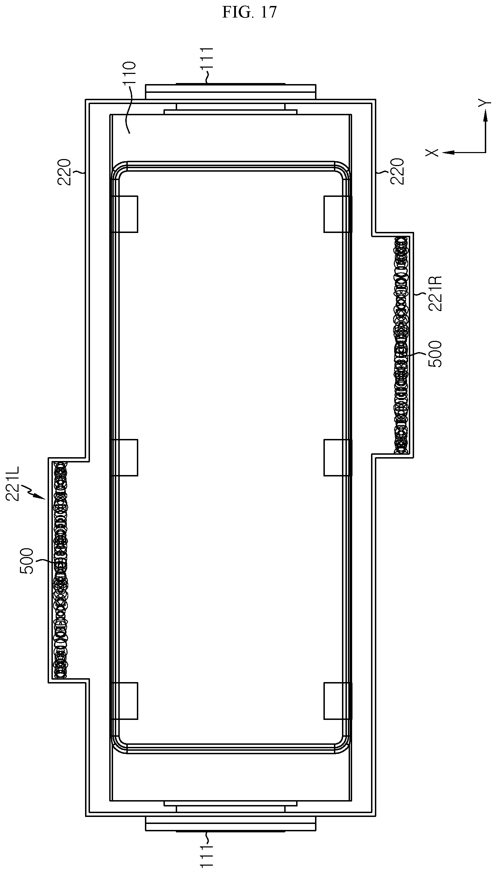

FIG. 17 is a top view schematically showing a battery module according to still another embodiment of the present disclosure. For this embodiment, features different from the former embodiments will also be described in detail.

Referring to FIG. 17, the battery module according to the present disclosure may further include a porous member 500. The porous member 500 may be configured to have a plurality of pores therein. In particular, these pores may be configured to communicate with the outside. That is, the pores included in the porous member 500 may be regarded as empty spaces filled with only gas, and these pores may not be sealed but be configured to communicate with the outside. For example, the porous member 500 may be configured such that a plurality of wires, particularly a plurality of wires made of a material such as metal or polymer, are entangled with each other. In particular, the porous member 500 may be configured to be inserted into the inner space of the left trap unit 221L and/or the right trap unit 221R.

According to this configuration of the present disclosure, it is possible to more effectively prevent the spark or flare introduced into the trap unit 221 from moving to the outside by the pores formed in the porous member 500. In particular, since active material particles or the like included in the spark, flare, or the like are collected in the pores of the porous member 500, the discharge of the active material particles or the like to the outside of the module case 200 may be more reliably blocked.

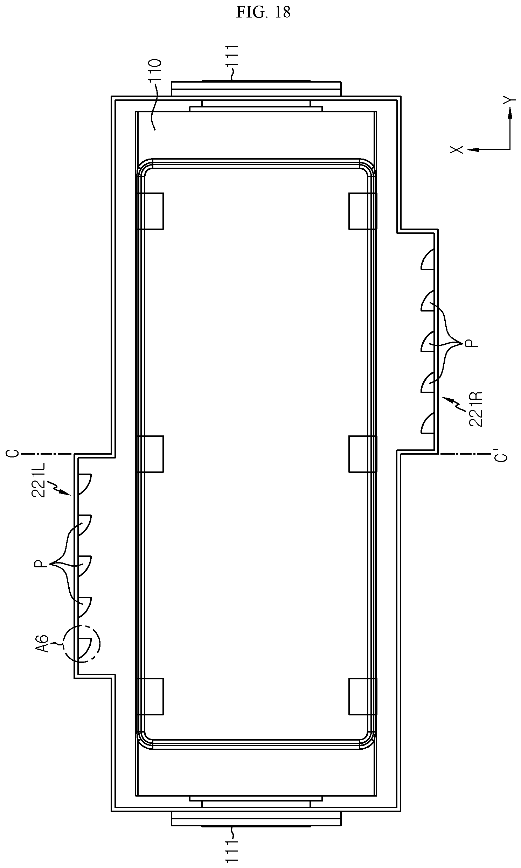

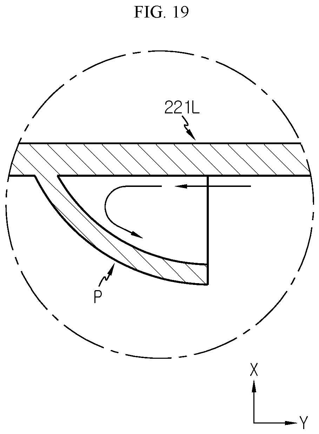

FIG. 18 is a top view schematically showing a battery module according to still another embodiment of the present disclosure. Also, FIG. 19 is an enlarged view showing the portion A6 of FIG. 18. For this embodiment, features different from the former embodiments will also be described in detail.

First, referring to FIG. 18, a plurality of blocking protrusions P may be formed on the inner surface of the trap unit 221. The blocking protrusion P is formed to protrude in a direction (X-axis direction) toward the cell assembly 100 on the inner surface of the side plate 220. In addition, the blocking protrusion P has an empty space therein but the empty space may be configured to be opened in the front and rear direction, especially in a direction toward the central portion in the front and rear direction of the side plate 220. In addition, the inner space of the blocking protrusion P may be configured to be closed toward the front end or the rear end of the side plate 220.

More specifically, seeing the configuration of FIG. 19, the blocking protrusion P of the left trap unit 221L in the drawing may be configured to be open toward the front side (+Y-axis direction), which is a direction toward the center line (line C-C') in the front and rear direction. In addition, the blocking protrusion P of the left trap unit 221L may be configured to be closed in a direction toward the rear end (-Y-axis direction). Meanwhile, the blocking protrusion P of the right trap unit 221R may be configured to be opened toward the rear side (-Y-axis direction), which is a direction toward the center line (line C-C') in the front and rear direction. In addition, the blocking protrusion P of the right trap unit 221R may be configured to be closed in a direction toward the front end (+Y-axis direction).

According to this configuration of the present disclosure, by the plurality of blocking protrusions P formed on the inner surface of the trap unit 221, the discharge of spark, flare, or the like to the outside may be more reliably blocked. For example, referring to FIG. 19, as indicated by the arrows, while the spark, flare, or the like moving to the rear along the inner surface of the left trap unit 221L flows into the inner space of the blocking protrusion P, its movement may be blocked and its moving direction may be changed to the front. Therefore, in this case, the effect of blocking movement of spark, flare, or the like may be further improved.

A battery pack according to the present disclosure may include a plurality of battery modules according to the present disclosure described above. In addition, the battery pack according to the present disclosure may further include various other components other than the battery module, for example components of the battery pack known at the time of filing of this application, such as a BMS, a bus bar, a pack case, a relay, a current sensor, and the like.

An energy storage system according to the present disclosure may include at least one battery module according to the present disclosure. In particular, the energy storage system may include a plurality of battery modules according to the present disclosure in the form of being electrically connected to each other in order to have a large energy capacity. Alternatively, a plurality of battery modules according to the present disclosure may configure one batter pack, and the energy storage system may be configured to include a plurality of battery packs. In addition, the energy storage system according to the present disclosure may further include other various components of the energy storage system known at the time of filing of this application. Moreover, the energy storage system may be used in various places or devices, such as a smart grid system or an electric charging station. In particular, if the battery module according to an embodiment of the present disclosure is adopted, the energy density of the battery pack or the energy storage system may be improved.

Meanwhile, in this specification, terms indicating directions such as "upper", "lower", "left", "right", "front", and "rear" are used, but these terms are just for convenience of explanation, and it is obvious to those skilled in the art that these terms may vary depending on the location of an object or the position of an observer.

The present disclosure has been described in detail. However, it should be understood that the detailed description and specific examples, while indicating preferred embodiments of the disclosure, are given by way of illustration only, since various changes and modifications within the scope of the disclosure will become apparent to those skilled in the art from this detailed description.

### Reference Signs

100: cell assembly
110: secondary battery
111: electrode lead
200: module case
210: lower plate
220: side plate
220L: left plate, 220R: right plate
221: trap unit
221L: left trap unit, 221R: right trap unit
222: protrusion
223: guide unit
223L: left guide unit, 223R: right guide unit
230: upper plate
240: front plate
250: rear plate
300: bus bar assembly
310: module bus bar, 320: bus bar housing
321: slot
400: mesh member
500: porous member
P: blocking protrusion

## Claims

1. A battery module, comprising:
a cell assembly including a plurality of secondary batteries stacked on each other; and
a module case including a lower plate, a side plate and an upper plate to form an inner space so that the cell assembly is accommodated therein, the module case including a trap unit formed in at least a part of an inner surface of the side plate to be concave outward, the trap unit being formed to be biased in a front or rear direction.

2. The battery module according to claim 1,
wherein the trap unit is formed to protrude outward at an outer surface of the side plate.

3. The battery module according to claim 1,
wherein in the cell assembly, the plurality of pouch-type secondary batteries are stacked in a vertical direction in a laid-down state,
an electrode lead of the pouch-type secondary battery is located in a front and rear direction of the module case, and
the module case is configured such that at least one of front and rear sides thereof is opened.

4. The battery module according to claim 1,
wherein when gas is generated from the cell assembly, the module case is configured to discharge the generated gas to at least one of front and rear sides.

5. The battery module according to claim 1,
wherein the trap unit is configured to be located at only one side based on a center line in a front and rear direction of the side plate.

6. The battery module according to claim 1,
wherein the side plate includes a left plate and a right plate,
the trap unit includes a left trap unit formed at the left plate and a right trap unit formed at the right plate, and
the left trap unit and the right trap unit are configured to be located at opposite sides based on a center line in a front and rear direction of the side plate.

7. The battery module according to claim 1,
wherein at least a part of the trap unit is formed such that a depth of the concave portion thereof gradually increases in a front or rear direction.

8. The battery module according to claim 1,
wherein the side plate further includes a guide unit formed to be inclined toward the trap unit.

9. The battery module according to claim 1,
wherein the module case further includes a protrusion formed at a front end or a rear end of the trap unit to protrude in a central direction.

10. The battery module according to claim 1,
wherein a front end or a rear end of the trap unit is formed to be concave in a front or rear direction.

11. A battery pack, comprising a plurality of battery modules according to any one of claims 1 to 10.

12. An energy storage system, comprising the battery module according to any one of claims 1 to 10.
